# EUROPEAN PATENT SPECIFICATION

(11) **EP 0 724 915 B1**
(45) Date of publication and mention of the grant of the patent: **01.08.2001**
(21) Application number: 96101186.3
(22) Date of filing: 29.01.1996
(51) Int. Cl.: B05D 5/00, C09D 127/18

(54) **Water paint for non-stick PTFE-based coating of shaped aluminium articles or aluminium sheet**
Hydrolack für Antihaft-PTFE-Beschichtung von geformten Aluminiumartikeln oder Aluminiumband
Peinture aqueuse pour revêtement anti-adhésif à base de PTFE pour articles moulés ou feuilles d'aluminium

(30) Priority: 31.01.1995 IT MI950159
(43) Date of publication of application: 07.08.1996
(73) Proprietor: Akzo Nobel Non Stick Coatings S.r.l., Fombio (Lodi) (IT)
(72) Inventor: Bignami, Claudio Giuseppe, I-20071 Casalpusterlengo (IT)
(74) Representative: Gervasi, Gemma, Dr.

(56) References cited:
- GB-A- 833 899

## Description

The present invention relates to a PTFE-based water paint for a non-stick and very high abrasion resistant coating of a pre-degreased aluminium support. It is a major object of the invention to provide a formulation suitable for constituting the primer and containing:
- polytetrafluoroethylene (PTFE) as a 60% by weight aqueous dispersion of PTFE;
- polyamidoimide (PAI) resin as a 30% by weight solution of PAI in N-methylpyrrolidone;
- carbon black;
- colloidal silica as an aqueous dispersion;
and furthermore containing per 100 parts by weight of the formulation 1 to 6 parts by weight of an "anti-abrasive" additive, which has the function to increase the abrasion resistance of the coating and consists of the siliceous substance, cristobalite, in particular of the type available under the trademark Sibelco B0012.

A typical formulation of this primer is specified in Table 1 (standard formulation marked LBD.007).

A further primer formulation according to the invention, still containing 1 to 6 parts by weight of the aforesaid anti-abrasive, consists of the following ingredients:
- PTFE as a 60% by weight aqueous dispersion of polymer;
- polyphenylene sulphide (PPS), in the powder form;
- PAI resin as a solution in N-methylpyrrolidone;
- carbon black.

The weight ratios of said ingredients, referred to PTFE, PPS and PAI on dry basis, are approx. as follows:
PTFE/PPS of 35/65 to 55/45; PAI resin content on dry basis less than 10% of PTFE+PPS (on dry basis), carbon black content of 10% to 15% of PTFE+PPS+PAI.

The above formulation may contain further acrylic resin in form of aqueous dispersion in amount corresponding to 1 - 1.5 parts by weight (dry substance) on 100 parts by weight of formulation.

A typical formulation of this type of primer is specified in Table 2 (standard formulation marked LBD.2).

The non-stick coating is obtained with a primer overlaid with a top coat as a finish. A particularly suitable top coat composition is as follows (herein marked LBD.4):
a) commercial PTFE aqueous dispersion containing 60% by weight of PTFE and conventional surfactants;
b) polyoxyalkylene-modified dimethylpolysiloxane (DMPS), in a quantity equal to 0.5 to 5 parts by weight and preferably 2 to 4 parts by weight;
c) acrylic polymers, as an aqueous dispersion, in a quantity up to 2% by weight of PTFE+DMPS.

Ingredient b) consists of DMPS modified with oxyalkylene (oxyethylene and/or oxypropylene) units at an oxyalkylene units/siloxane units (CH₃)₂SiO ratio ranging between 92:8 and 88:12 by weight.

This datum comes out from the thermogravimetric analysis of polyethermodified DMPS which provides experimental evidence that, at 420°C, the product entirely decomposes in 5 minutes only and the residue exclusively consists of the siloxane part, said residue being 8% to 12% of the original weight.

Ingredient b), as an aqueous dispersion, may advantageously consist of product BYC 302 (BYC Chemie) containing 90% by weight of polyether (ethoxy and/or propoxy) groups.

Prior art document GB 833.899 discloses the use of silicones in combination with PTFE in order to form coating layer with reduced adherence tendency of substances to the surface. As silicones this document mentions only methylphenyl silicones and methylsilicone, in no way polyxyalkyllene-modified dimethylpolysiloxanes are cited. Furthermore according to this prior art the silicones are used prevainlingly in the primer layer: according to the present invention instead the silicones (of the "modified" type) are used only in the top coat, not in the primer layer.

The coating according to the present invention may be applied to aluminium shaped articles such as pots, pans, lids, mixing spoons and all other utensils usually employed for food preparation and cooking (baking pans, oven racks, etc.) as well as to aluminium sheet to be shaped into the aforesaid articles. In the latter case, the formulation specified in Table 2 is particularly appropriate.

In both cases, the aluminium support is simply predegreased according to one of the known methods, i.e. in an alkaline or acid environment, or with organic solvents. In any case, the resulting aluminium support maintains the Ra surface roughness of the aluminium sheet, i.e. lower than 1.2 µ.

The coating is realized by applying the formulation for the primer and subjecting the coated manufactured articles to a forced air flow in order to dry the layer of the primer formulation (without overcoming 120°C). Then the top coat formulation is applied and the painted article. is finally subjected to the caking in oven at a temperature between 380° and 440°C preferably between 410° and 430°C.

The claimed coating exhibits an excellent adhesion to the aluminium support, without having to be subjected to pretreatments (sand-blasting, grinding) meant for roughness increase.

The paint added with cristobalite exhibits an extraordinary increase in the abrasion resistance when compared with formulations of identical composition except for the mineral filler being other than cristobalite (see Table 3).

The Applicant's test was conducted by measuring the coating thickness after each series of 250 abrasion cycles to total wearing out of the coating. The behaviours of the various samples toward the abrasion resistance were thus clearly evidenced.

Cristobalite particle size too is to be selected to obtain a coating of superior qualities: in fact, a coating of the final product based on a paint formulation coontaining larger particle sized cristobalite H. (Sibelco B0006) was found to be inadequate as it was excessively rough.

A salient advantage of the present invention is that the claimed paint exhibits an excellent abrasion resistance when applied to an aluminium support of very low roughness corresponding to that of the aluminium sheet currently used for the manufacture of articles according to the present invention. It follows that there is no need for increasing the surface roughness - which usually contributes to the improvement in abrasion resistance - by adequate mechanical treatments, such as grinding and sand-blasting (see Table 4).

The trade names and relevant particle sizes of the products tested as anti-abrasives are shown in Table 5.

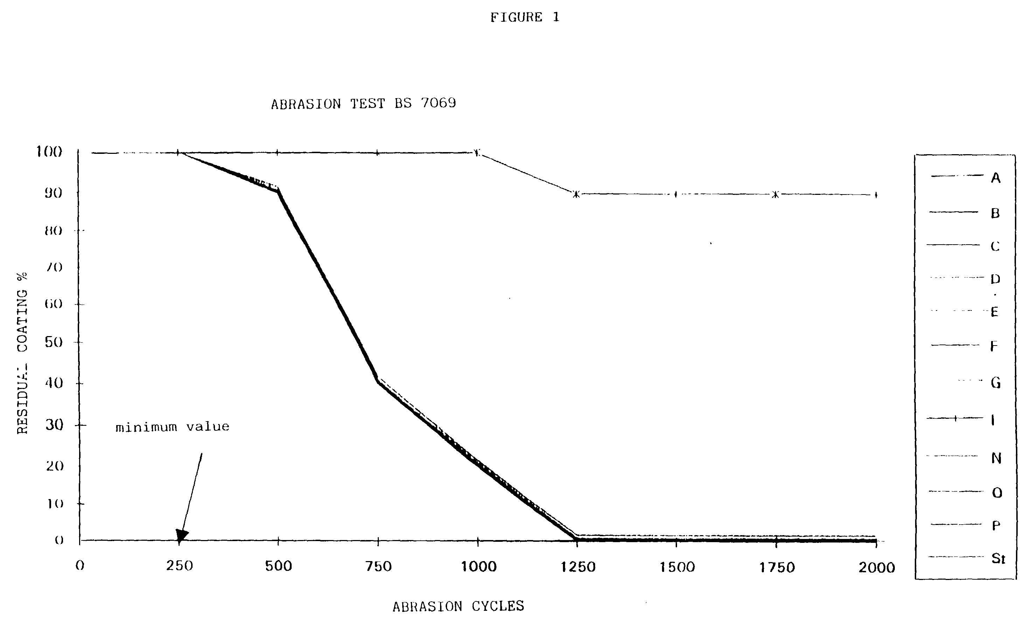

Fig. 1 is a graph illustrating the results shown in Table 2.

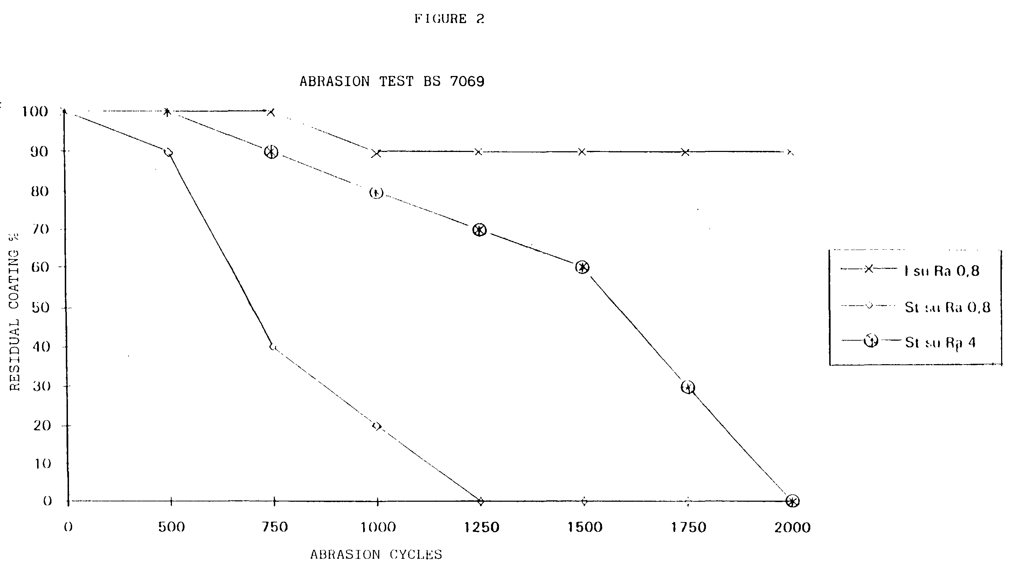

Fig. 2 is a graph illustrating the results shown in Table 3.

The results of adhesion tests to the aluminium support are shown in Table 6.

The results of carbonized milk adhesion tests are shown in Table 7.

Tests conducted on coatings obtained using the formulation specified in Table 2. as a primer, gave substantially analogous results to those shown in Tables 3, 4, 6, and 7.

The following conclusions may be drawn from the results obtained from the tests conducted on the various formulations.

Cristobalite addition causes an extraordinary increase in the abrasion resistance and maintained the adhesion to the aluminium support at high values. The non-stick properties of the top coat remained unchanged.

**Table 1 -**

| **Primer for aluminium supports - Formulation LBD.007 for anti-abrasives testing - Composition (% by weight)** | |
|---|---|
| POLYMERS | |
| - PTFE dispersion (60% polytetrafluoroethylene) | 30 |
| - polyamidoimide resin PAI (dry residue) (as 29% solution in N-methylpyrrolidone) | 4.4 |

| SURFACTANTS | |
|---|---|
| - polyethoxylated alkylphenols already present in the PTFE dispersion as delivered. % | 0.9 |
| polyethoxylated alkylphenols | 2 |
| acetylene-derived diol (Surfinol 104 from Air Products) | 0.5 |

| PIGMENTS | |
|---|---|
| - carbon black | 1.5 |

| SOLVENTS | |
|---|---|
| - methoxy propanol | 5 |
| - N-methylpyrrolidone (in the PAI solution as delivered) | 11 |

| OTHER INGREDIENTS | |
|---|---|
| - colloidal silica in sodium ion-stabilized aqueous dispersion (30% dry residue) | 20 |
| - triethylamine TEA | 2.5 |
| - dimethylethanolamine DMEOLA | 2.5 |
| - deionized water | balance to 100 |
| - anti-abrasive agent: | the monitored anti-abrasive quantity is 1 to 6 parts by weight per 100 parts by weight of formulation |

**Table 2 -**

| **Primer for aluminium supports - Formulation LBD.2 for anti-abrasives testing - Composition (% by weight)** | |
|---|---|
| POLYMERS | |
| - PTFE dispersion, Algoflon D60 (60% polytetrafluoroethylene) | 19 |
| - polyamidoimide resin PAI (dry residue) (as 29% solution in N-methylpyrrolidone) | 2.25 |
| - PPS resin in the powder form, Fortron X | 12 |
| - acrylic resin as 145% aqueous dispersion | 3.2 |

| SURFACTANTS | |
|---|---|
| - polyethoxylated alkylphenols already present in the PTFE dispersion as delivered, % | 0.9 |
| - polyethoxylated alkylphenols | 2 |
| - ethoxylated urethane (thickener) | 63.7 |

| PIGMENTS | |
|---|---|
| - carbon black | 3.5 |

| SOLVENTS | |
|---|---|
| - ethylene glycol monomethyl ether | 2 |
| - N-methylpyrrolidone (in the PAI solution as delivered) | 6 |

| OTHER INGREDIENTS | |
|---|---|
| - triethylamine TEA | 1.5 |
| - dimethylethanolamine DMEOLA | 1.5 |
| - deionized water | balance to 100 |
| - anti-abrasive agent: | the monitored anti-abrasive quantity is 1 to 6 parts by weight per 100 parts by weight of formulation |

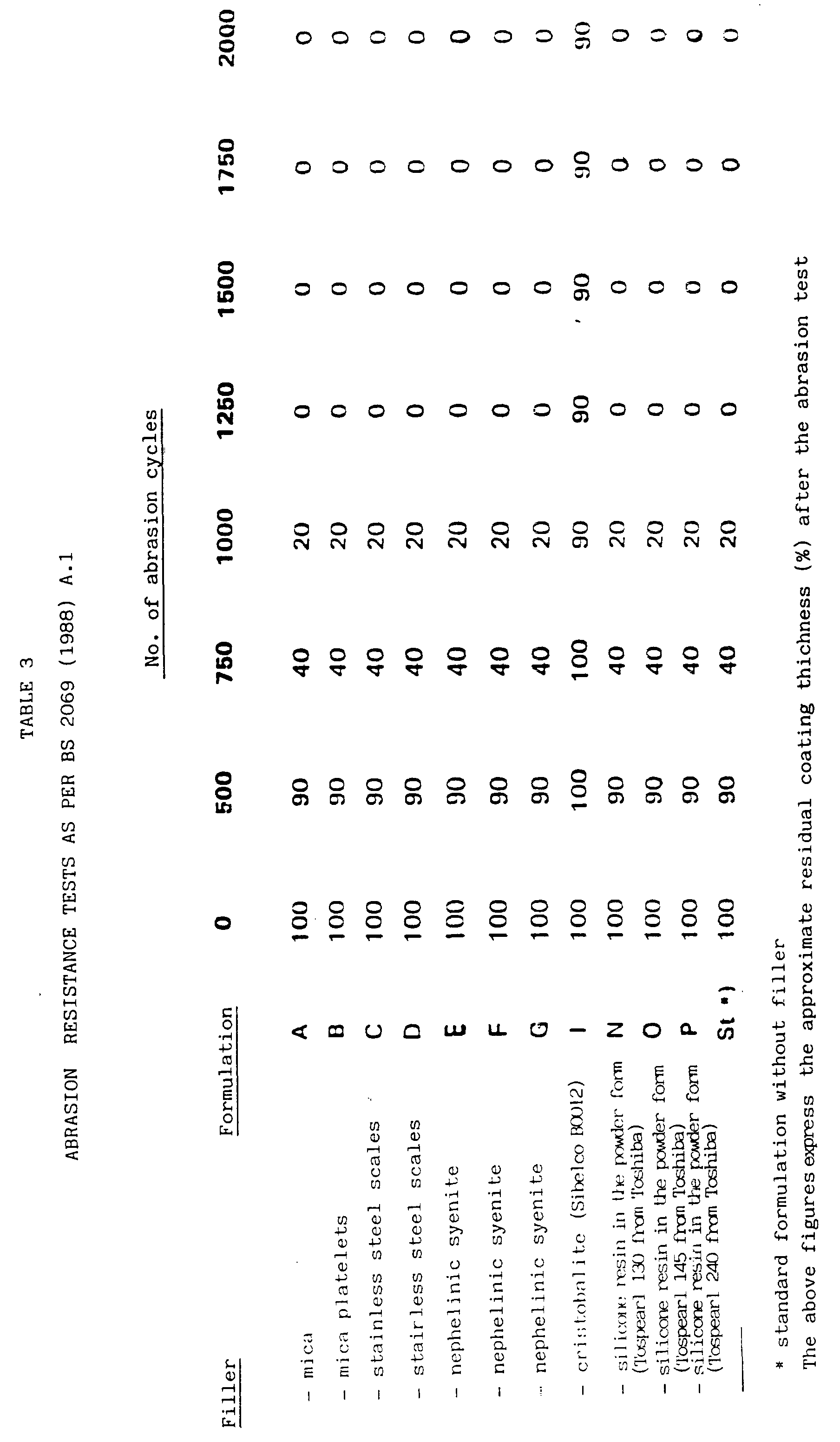

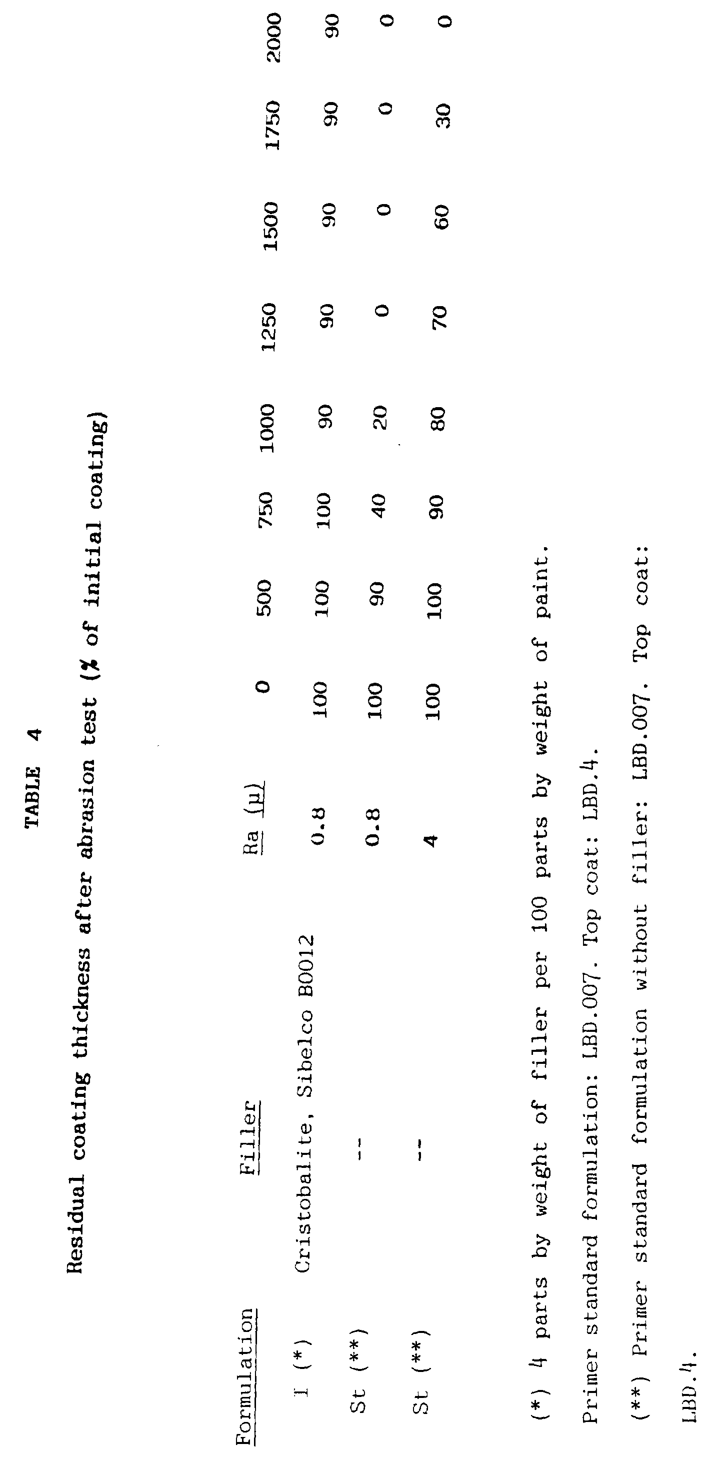

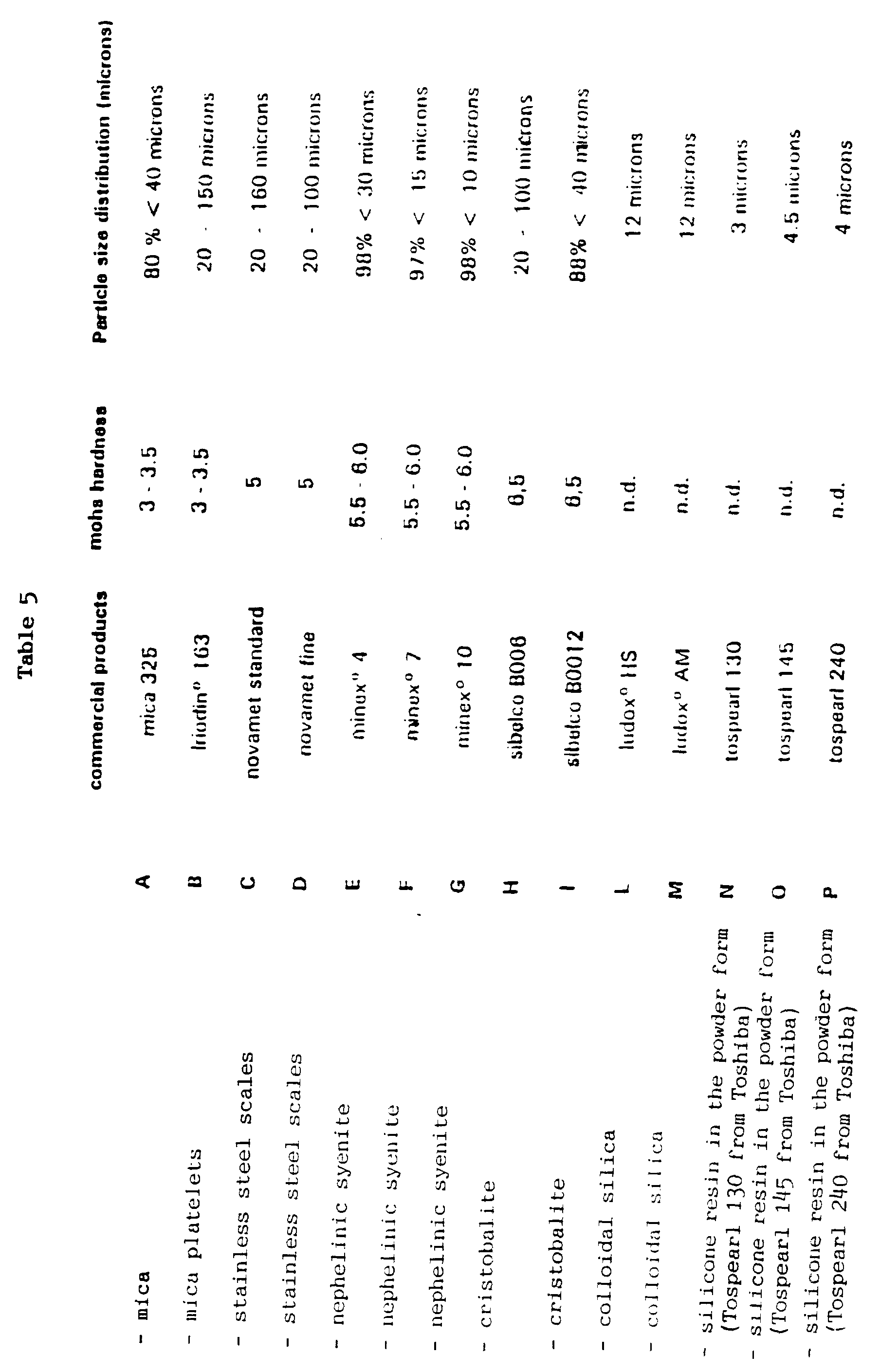

**Table 6 -**

| **Crosshatch and tear resistance tests after 24-hr immersion in water at 90°C** | | |
|---|---|---|
| Antiabrasiv additives | | Adhesion to the support (compared to standard*) |
| - mica | A | unchanged |
| - mica platelets | B | unchanged |
| - stainless steel scales | C | unchanged |
| - stainless steel scales | D | unchanged |
| - nephelinic syenite | E | unchanged |
| - nephelinic syenite | F | unchanged |
| - nephelinic syenite | G | unchanged |
| - cristobalite | I | unchanged |
| - colloidal silica | L | loss |
| - colloidal silica | M | loss |
| - silicone resin in the powder form (Tospearl 130 from Toshiba) | N | unchanged |
| - silicone resin in the powder form (Tospearl 145 from Toshiba) | O | unchanged |
| - silicone resin in the powder form (Tospearl 240 from Toshiba) | P | unchanged |

Standard stands for a coating consisting of a primer without anti-abrasives

**Table 7 -**

| **Carbonized milk adhesion test as per BS 7069 (0 = excellent; 4 = very poor)** | | |
|---|---|---|
| | | Non-stick property |
| - mica | A | 0 - 1 |
| - mica platelets | B | 0 - 1 |
| - stainless steel scales | C | 0 - 1 |
| - stainless steel scales | D | 0 - 1 |
| - nephelinic syenite | E | 0 - 1 |
| - nephelinic syenite | F | 0 - 1 |
| - nephelinic syenite | G | 0 - 1 |
| - cristobalite | I | 0 - 1 |
| - colloidal silica | L | 0 - 1 |
| - colloidal silica | M | 0 - 1 |
| - silicone resin in the powder form (Tospearl 130 from Toshiba) | N | 0 - 1 |
| - silicone resin in the powder form (Tospearl 145 from Toshiba) | O | 0 - 1 |
| - silicone resin in the powder form (Tospearl 240 from Toshiba) | P | 0 - 1 |
| - standard* | - | 0 - 1 |

Standard stands for a coating consisting of a primer without anti-abrasives

## Claims

1. Process for obtaining non-stick PTFE-based coating on shaped aluminium articles or aluminium sheet to be used in the manufacture of said articles, consisting of the following process steps:
a) applying a formulation suitable for constituting the primer and containing the following essential ingredients:
- commercial PTFE aqueous dispersion containing 60% by weight of PTFE and conventional surfactants;
- PAI resin as a solution in N-methylpyrrolidone;
- carbon black;
- cristobalite, in a quantity equal to 1 to 6 parts by weight per 100 parts by weight of formulation;
- conventional surfactants and water (balance to 100 parts by weight);
b) drying of the layer of primer formulation through a forced air flow in such working conditions not to overcome 120°C;
c) applying a formulation suitable for constituting the top coat on the primer and containing the following essential ingredients:
- commercial PTFE aqueous dispersion containing 60% by weight of PTFE and conventional surfactants;
- polyoxyalkylene-modified DMPS, in a quantity of 2 to 4% by weight of PTFE;
- acrylic polymers, as an aqueous dispersion, in a quantity up to 2% by weight max. of PTFE.
d) exhaustive baking of the coating at 380°÷440°C.

2. Process according to claim 1, wherein it is used, for the "top coat" formulation a DMPS modified with oxyalkylene (oxyethylene and/or oxypropylene) units at an oxylalkylene units/siloxane units (CH₃)₂SiO ratio ranging between 92:8 and 88:12 by weight.

3. Process according to claim 1, wherein the formulation for the primer layer contains:
- commercial PTFE aqueous dispersion containing 60% by weight of PTFE and conventional surfactants, in a quantity equal to 18 parts by weight of PTFE per 100 parts by weight of formulation;
- PAI resin as a solution in N-methylpyrrolidone, in a quantity of 4.4 parts by weight:
- carbon black, in a quantity of 1.5 parts by weight;
- colloidal silica in an aqueous dispersion at 30% by weight, in a quantity of 20 parts by weight;
- cristobalite, in a quantity of 4 parts by weight:
- conventional surfactants, solvents, and water (balance to 100 parts by weight).

4. Process according to claim 1, wherein the formulation for the primer layer contains:
- commercial PTFE aqueous dispersion containing 60% by weight of PTFE and conventional surfactants, in a quantity equal to 11.4 parts by weight of PTFE per 100 parts by wt. of formulation;
- PAI resin as a solution in N-methylpyrrolidone, in a quantity of 2.25 parts by weight;
- PPS resin in the powder form, in a quantity of 12 parts by weight;
- acrylic resin in an aqueous dispersion in a quantity corresponding to 1.44 parts by weight (dry substance);
- carbon black, in a quantity of 3.5 parts by weight;
- cristobalite, in a quantity of 4 parts by weight;
- conventional surfactants, solvents, and water (balance to 100 parts by weight).

## Patentansprüche

1. Verfahren zum Erhalten einer Antihaftbeschichtung auf PTFE-Basis auf ausgeformten Aluminiumartikeln oder Aluminiumband, das bei der Herstellung besagter Artikel verwendet werden soll, bestehend aus den folgenden Verfahrensschritten:
a) Aufbringen einer Formulierung, die geeignet ist, die Grundierung darzustellen, und die folgende wesentliche Inhaltsstoffe enthält:
- kommerzielle wäßrige PTFE-Dispersion, die 60 Gew.-% PTFE und herkömmliche Tenside enthält;
- PAI-Harz als eine Lösung in N-Methylpyrrolidon;
- Ruß;
- Cristobalit, in einer Menge, die 1 bis 6 Gewichtsteilen pro 100 Gewichtsteile Formulierung entspricht;
- herkömmliche Tenside und Wasser (Rest auf 100 Gewichtsteile);
b) Trocknen der Grundierungsformulierungsschicht durch einen Zwangsluftstrom in solchen Arbeitsbedingungen, daß 120°C nicht überschritten werden;
c) Aufbringen einer Formulierung, die geeignet ist, die Deckschicht auf der Grundierung darzustellen, und die folgende wesentliche Inhaltsstoffe enthält:
- kommerzielle wäßrige PTFE-Dispersion, die 60 Gew.-% PTFE und herkömmliche Tenside enthält;
- Polyoxyalkylen-modifiziertes DMPS, in einer Menge von 2 bis 4 Gew.-% des PTFE;
- Acrylpolymere, als eine wäßrige Dispersion, in einer Menge von bis zu maximal 2 Gew.-% des PTFE;
d) erschöpfendes Aushärten der Beschichtung bei 380° bis 440°C.

2. Verfahren nach Anspruch 1, dadurch gekennzeichnet, daß für die "Deckschicht"-Formulierung ein DMPS verwendet wird, das mit Oxyalkylen(Oxyethylen und/oder Oxypropylen)-Einheiten modifiziert ist, mit einem Verhältnis von Oxyalkylen-Einheiten/Siloxan-Einheiten (CH₃)₂SiO im Bereich zwischen 92:8 und 88:12, gewichtsbezogen.

3. Verfahren nach Anspruch 1, dadurch gekennzeichnet, daß die Formulierung für die Grundierungsschicht enthält:
- kommerzielle wäßrige PTFE-Dispersion, die 60 Gew.-% PTFE und herkömmliche Tenside enthält, in einer Menge, die 18 Gewichtsteilen PTFE pro 100 Gewichtsteile Formulierung entspricht;
- PAI-Harz als eine Lösung in N-Methylpyrrolidon, in einer Menge von 4,4 Gewichtsteilen;
- Ruß, in einer Menge von 1,5 Gewichtsteilen;
- kolloidales Siliciumdioxid in einer wäßrigen Dispersion mit 30 Gew.-%, in einer Menge von 20 Gewichtsteilen,
- Cristobalit, in einer Menge von 4 Gewichtsteilen;
- herkömmliche Tenside, Lösungsmittel und Wasser (Rest auf 100 Gewichtsteile).

4. Verfahren nach Anspruch 1, dadurch gekennzeichnet, daß die Formulierung für die Grundierungsschicht enthält:
- kommerzielle wäßrige PTFE-Dispersion, die 60 Gew.-% PTFE und herkömmliche Tenside enthält, in einer Menge, die 11,4 Gewichtsteilen PTFE pro 100 Gewichtsteile Formulierung entspricht;
- PAI-Harz als eine Lösung in N-Methylpyrrolidon, in einer Menge von 2,25 Gewichtsteilen;
- PPS-Harz in Pulverform, in einer Menge von 12 Gewichtsteilen;
- Acrylharz in einer wäßrigen Dispersion in einer Menge, die 1,44 Gewichtsteilen entspricht (Trockenmasse);
- Ruß, in einer Menge von 3,5 Gewichtsteilen;
- Cristobalit, in einer Menge von 4 Gewichtsteilen;
- herkömmliche Tenside, Lösungsmittel und Wasser (Rest auf 100 Gewichtsteile).

## Revendications

1. Procédé d'obtention d'un revêtement anti-adhésif à base de PTFE sur des articles moules en aluminium ou une feuille d'aluminium à utiliser dans la fabrication desdits articles, consistant en les étapes de procédé qui suivent :
a) application d'une formulation appropriée à constituer la couche d'apprêt et contenant les ingrédients essentiels qui suivent :
- dispersion aqueuse de PTFE du commerce contenant 60% en poids de PTFE et des agents tensioactifs conventionnels ;
- résine PAI sous la forme d'une solution dans la N-methylpyrrolidone,
- noir de carbone ;
- cristobalite, en une quantité égale à 1 à 6 parties en poids pour 100 parties en poids de la formulation ;
- agents tensioactifs conventionnels et eau (reste jusqu'à 100 Parties en poids) ;
b) séchage de la couche de la formulation d'apprêt à travers un écoulement d'air force dans des conditions de travail telles que cela ne dépasse pas 120°C ;
c) application d'une formulation appropriée pour constituer la couche supérieure sur la couche d'apprêt et contenant les ingrédients essentiels qui suivent :
- dispersion aqueuse de PTFE du commerce contenant 60% en poids de PTFE et des agents tensioactifs conventionnels ;
- DMPS modifié par du polyoxyalkylène en une quantité de 2 à 4% en poids de PTFE ;
- polymères acryliques, sous la forme d'une dispersion aqueuse, en une quantité jusqu'à 2% en poids au maximum de PTFE.
d) cuisson exhaustive du revêtement à 380°-440°C.

2. Procédé selon la revendication où on utilise, pour la formulation de la "couche supérieure", un DMPS modifié par des unités d'oxyalkyléne (oxyéthylène et/ou oxypropylène) à un rapport unités d'oxyalkylène/unités de siloxane (CH₃)₂SiO compris entre 92:8 et 88:12 en poids.

3. Procédé selon la revendication 1, où la formulation pour la couche d'apprêt contient :
- une dispersion aqueuse de PTFE du commerce contenant 60% en poids de PTFE et des agents tensioactifs conventionnels en une quantité égale à 18 parties en poids de PTFE pour 100 parties en poids de la formulation ;
- de la résine PAI sous la forme d'une solut on dans la N-méthylpyrrolidone en une quantité de 4,4 parties en poids ;
- du noir de carbone, en une quantité de 1,5 parties en poids ;
- de la silice colloïdale en une dispersion aqueuse à 30% en poids en une quantité de 20 parties en poids ;
- de la cristobalite en une quantité de 4 parties en poids ;
- agents tensioactifs, solvants et eau (reste jusqu'à 100 parties en poids) conventionnels ;

4. Procédé selon la revendication 1, où la formulation pour la couche d'apprêt contient :
- une dispersion aqueuse de PTFE du commerce contenant 60% en poids de PTFE et des agents tensioactifs conventionnels en une quantité égale à 11,4 parties en poids de PTFE pour 100 parties en poids de la formulation ;
- résine PAI sous la forme d'une solution dans la N-méthylpyrrolidone, on une quantité de 2,25 parties en poids ;
- résine PPS sous forme de poudre, en une quantité de 12 parties en poids,
- résine acrylique dans une dispersion aqueuse en une quantité correspondant à 1,11 partics en poinds (substance sèche) ;
- noir de carbone en une quantité de 3,5 parties en poids ;
- cristobalite en une quantité de 4 parties en poids ;
- agents tensioactifs, solvants et eau (reste jusqu'à 100 parties en poids) conventionnels.
